# EUROPÄISCHE PATENTSCHRIFT

(11) **EP 3 395 652 B1**
(45) Veröffentlichungstag und Bekanntmachung des Hinweises auf die Patenterteilung: **30.09.2020**
(21) Anmeldenummer: 18168865.6
(22) Anmeldetag: 24.04.2018
(51) Int. Cl.: B62D 15/02, G05D 1/00

(54) **FAHRASSISTENZSYSTEM FÜR EIN FAHRZEUG MIT EINEM AUSPARKASSISTENTEN UND EINEM LANGSAMFAHR-FOLGEASSISTENTEN**
DRIVING ASSIST SYSTEM FOR A VEHICLE WITH AN ASSISTANT FOR DRIVING OUT OF A PARKING SPACE AND A SLOW TRAVEL ASSISTANT
SYSTÈME D'AIDE À LA CONDUITE POUR UN VÉHICULE AU MOYEN D'UNE AIDE À LA SORTIE DE STATIONNEMENT ET D'UNE AIDE À LA CONDUITE À BASSE VITESSE

(30) Priorität: 27.04.2017 DE 102017109070
(43) Veröffentlichungstag der Anmeldung: 31.10.2018
(73) Patentinhaber: Valeo Schalter und Sensoren GmbH, 74321 Bietigheim-Bissingen (DE)
(72) Erfinder: Tzempetzis, Dimitrios, 74321 Bietigheim-Bissingen (DE); Heimberger, Marco, 74321 Bietigheim-Bissingen (DE); Geiger, Tobias, 74321 Bietigheim-Bissingen (DE); Blinkle, Frank, 74321 Bietigheim-Bissingen (DE)
(74) Vertreter: Pothmann, Karsten

(56) Entgegenhaltungen:
- EP-A1- 2 746 137
- EP-A2- 1 245 427
- EP-A2- 3 132 987
- DE-A1-102014 224 099

## Beschreibung

Die vorliegende Erfindung betrifft ein Fahrassistenzsystem für ein Fahrzeug mit einem Ausparkassistenten und einem Langsamfahr-Folgeassistenten.

Auch betrifft die vorliegende Erfindung ein Fahrzeug mit einem solchen Fahrassistenzsystem.

Des Weiteren betrifft die vorliegende Erfindung ein Verfahren zum autonomen Steuern eines Fahrzeugs zur Teilnahme an einer Verkehrssituation ausgehend von einem geparkten Fahrzeug angegeben.

Es sind verschiedenartige Assistenzsysteme für Fahrzeuge bekannt, die verschiedene Funktionen zum Führen des Fahrzeugs übernehmen, um dem Fahrzeugführer bei seinen Aufgaben zu unterstützen und zu entlasten. Dabei ist es möglich, dass einzelne Funktionen autonom durchgeführt werden. Beispielsweise sind Parkassistenzsysteme bekannt, die nicht nur einen Parkplatz auffinden und eine Trajektorie zum Einparken anzeigen, sondern die auch selbstständig das Fahrzeug entlang der Trajektorie in die Parklücke steuern, d.h. das Fahrzeug einparken, und es ggf. im Anschluss wieder aus der Parklücke manövrieren, d.h. ausparken. Andere Assistenzsysteme wie beispielsweise Staufahrassistenten oder Langsamfahr-Folgeassistenten sind als solche ebenfalls bekannt, genauso wie Assistenten zur adaptiven Geschwindigkeitssteuerung unter Berücksichtigung eines jeweils einzuhaltenden Sicherheitsabstands zu einem vorausfahrenden Fahrzeug.

Diese Assistenzsysteme werden bereits seit einiger Zeit in Neufahrzeugen angeboten, sind entsprechend ausgereift und werden auch von Fahrzeugführern akzeptiert. Trotzdem sind diese Assistenzsysteme mit Problemen verbunden. So ist es beispielsweise beim Ausparken für den Fahrzeugführer teilweise schwer abzuschätzen, wann ein Ausparkvorgang abgeschlossen ist, und wann er das Fahrzeug übernehmen und selber führen muss. Aufgrund von unterschiedlichen Parklückengrößen ergeben sich teilweise bei demselben Assistenzsystem unterschiedliche und nicht immer vorhersehbare Endpositionen beim Ausparken. Auch ist es teilweise nachteilig, wenn ein Fahrzeug nach dem Ausparken zunächst gestoppt wird, damit ein Fahrzeugführer das Fahrzeug übernehmen kann. Dies ist in verschiedenen Verkehrssituationen nachteilig und kann zu vermeidbaren Gefahrensituationen führen.

In diesem Zusammenhang ist beispielsweise in der US 8 560 175 B2 ein Verfahren zur Unterstützung eines Fahrers eines Fahrzeugs beim Ausparken aus einer seitlichen Parklücke längs zu einer Fahrbahn beschrieben. Das Verfahren umfasst die Schritte Start des Verfahrens, wenn aus einer Parklücke längs zu einer Fahrbahn ausgeparkt werden soll; Vermessung zumindest der Länge der Parklücke; Ermittlung einer Ausparktrajektorie zumindest anhand der durch die Vermessung gewonnenen Daten; Start des Ausparkvorgangs; Durchführung des Ausparkvorgangs unter gleichzeitiger Kollisionsverhütung durch Überwachung des Abstandes zu zumindest die Parklücke begrenzenden Objekten; und Beenden des Verfahrens, sobald ein kollisionsfreies Verlassen der Parklücke möglich ist.

Die DE 10 2014 224099 A1 ist als nächstliegender Stand der Technik nach dem Oberbegriff der Ansprüche 1 und 10 zu sehen und zeigt ein Verfahren zum Betreiben von mehreren Fahrzeugen, wobei an ein erstes Fahrzeug Navigationsdaten für eine autonome Navigation des ersten Fahrzeugs auf dem Parkplatz über ein Kommunikationsnetzwerk gesendet werden, wobei einem zweiten Fahrzeug das erste Fahrzeug als ein Führungsfahrzeug zugwiesen wird, dem das zweite Fahrzeug autonom folgen soll, wobei während das zweite Fahrzeug dem Führungsfahrzeug während der autonomen Navigation des Führungsfahrzeugs auf dem Parkplatz autonom folgt, ein Zielsignal an das zweite Fahrzeug über das Kommunikationsnetzwerk gesendet wird, und wobei das zweite Fahrzeug das Folgen abbrechen und sich in eine Zielposition abstellen soll.

Ausgehend von dem oben genannten Stand der Technik liegt der Erfindung somit die Aufgabe zugrunde, ein Fahrassistenzsystem der oben genannten Art, ein Fahrzeug mit einem solchen Fahrassistenzsystem und ein Verfahren zum autonomen Steuern eines Fahrzeugs zur Teilnahme an einer Verkehrssituation ausgehend von einem geparkten Fahrzeug anzugeben, welche die obigen Nachteile zumindest teilweise überwinden, und die insbesondere ein einfaches und zuverlässiges Ausparken eines Fahrzeugs und eine sichere Teilnahme an einer Verkehrssituation ermöglichen.

Die Lösung der Aufgabe erfolgt erfindungsgemäß durch die Merkmale der unabhängigen Ansprüche. Vorteilhafte Ausgestaltungen der Erfindung sind in den Unteransprüchen angegeben.

Erfindungsgemäß ist somit ein Fahrassistenzsystem für ein Fahrzeug mit einem Ausparkassistenten und einem Langsamfahr-Folgeassistenten angegeben, wobei das Fahrassistenzsystem ausgeführt ist, nach einem Ausparken des Fahrzeugs aus einer Parklücke einen nahtlosen Übergang von dem Ausparkassistenten zu dem Langsamfahr-Folgeassistenten durchzuführen.

Erfindungsgemäß ist außerdem ein Fahrzeug mit einem obigen Fahrassistenzsystem angegeben.

Weiter ist erfindungsgemäß ein Verfahren zum autonomen Steuern eines Fahrzeugs zur Teilnahme an einer Verkehrssituation ausgehend von einem geparkten Fahrzeug angegeben, umfassend die Schritte Aktivieren eines Ausparkassistenten, Ausparken des Fahrzeugs mit dem Ausparkassistenten, Aktivieren eines Langsamfahr-Folgeassistenten, und nahtloses Übergeben einer Fahrzeugsteuerung von dem Ausparkassistenten zu dem Langsamfahr-Folgeassistenten.

Grundidee der vorliegenden Erfindung ist es also, eine Verbindung zwischen den verschiedenen Fahrassistenzsystemen für jeweils einzelne Assistenzfunktionen bereitzustellen, um so die verschiedenen Assistenzfunktionen miteinander kombinieren zu können und darauf basierend eine weitergehende Funktionalität bereitstellen zu können. Durch den nahtlosen Übergang von der Kontrolle des Fahrzeugs durch den Ausparkassistenten zu dem Langsamfahr-Folgeassistenten kann der Führer des Fahrzeugs weiter entlastet werden. Eine Interaktion mit dem Fahrzeug ist nicht erforderlich. Dies erhöht die Verkehrssicherheit insgesamt, da auch ein unnötiges Halten des Fahrzeugs vermieden werden kann, was insbesondere in fließendem Verkehr problematisch sein kann. Durch den nahtlosen Übergang kann das Fahrzeug am Ende des Ausparkvorgangs, d.h. noch während der Ausparkassistent aktiv ist, von dem Langsamfahr-Folgeassistenten übernommen und weiter gesteuert werden. Die Verkehrssicherheit wird somit für andere Fahrzeuge wie auch für das eigene Fahrzeug erhöht und ein Verkehrsfluss verbessert. Auch kann ein höheres Maß an Autonomie für das Fahren erreicht werden, woraus insgesamt ein Komfortgewinn für den Führer des Fahrzeugs resultiert. Dabei kann der Führer des Fahrzeugs die Kontrolle über das Fahrzeug an einem beliebigen Ort bzw. zu einem beliebigen Zeitpunkt übernehmen, der im Wesentlichen im Ermessen des Fahrzeugführers liegt.

Der Ausparkassistent ist ein Assistenzsystem, welches das Fahrzeug üblicherweise autonom aus einer Parklücke auf eine Fahrbahn manövriert. Dabei ist es prinzipiell unerheblich, ob das Fahrzeug quer oder längs zur Fahrtrichtung in der Parklücke geparkt ist. Auch ein Ausparken in mehreren Zügen kann von dem Ausparkassistenten durchgeführt werden.

Der Langsamfahr-Folgeassistent wird auch teilweise als Stauassistent bezeichnet. Der Langsamfahr-Folgeassistent ist für ein autonomes Fahren des Fahrzeugs mit geringen Geschwindigkeiten zuständig. Üblicherweise ist der Langsamfahr-Folgeassistenten bei Geschwindigkeiten von bis zu 50 km/h oder 60 km/h verwendbar.

Während der Aktivität des Fahrassistenzsystems kann zu einem prinzipiell beliebigen Zeitpunkt der Führer des Fahrzeugs den Assistenten beenden und selber die Kontrolle über das Fahrzeug übernehmen. Dadurch wird die Verkehrssicherheit zusätzlich verbessert.

Die Ausführungen zum Ausparken gelten prinzipiell auch entsprechend für das Einparken des Fahrzeugs in einer Parklücke. In diesem Fall befindet sich das Fahrzeug zunächst unter der Kontrolle des Langsamfahr-Folgeassistenten. Das Fahrassistenzsystem aktiviert einen Einparkassistenten, und es erfolgt eine nahtlose Übergabe der Fahrzeugsteuerung von dem Langsamfahr-Folgeassistenten zu dem Ausparkassistenten. Vorzugsweise sind der Einparkassistent und der Ausparkassistent Komponenten eines Parkassistenten.

Der Ausparkassistent ist ausgeführt, ein an der Parklücke vorbeifahrendes Fahrzeug zu erfassen, und der Langsamfahr-Folgeassistent ist ausgeführt, dem an der Parklücke vorbeifahrenden Fahrzeug nach dem Ausparken zu folgen. Durch das Folgen des vorbeifahrenden Fahrzeugs kann dessen Fahrweise übernommen werden. Dadurch kann das Fahrzeug einfach in einen fließenden Verkehr eingegliedert werden. Dies erfolgt unter Einhaltung erforderlicher Sicherheitsabstände und anderer Verkehrsregeln.

In vorteilhafter Ausgestaltung der Erfindung ist der Langsamfahr-Folgeassistent ausgeführt, eine Fahrbahnmarkierung zu erfassen, und nach dem nahtlosen Übergang von dem Ausparkassistenten das Fahrzeug innerhalb der Fahrbahnmarkierung zu steuern. Die Fahrspuren geben einen Anhaltspunkt für die Steuerung des Fahrzeugs nach dem Ausparken. Somit kann der Langsamfahr-Folgeassistent das Fahrzeug in einer Verkehrssituation einfach einordnen und eine gewünschte Steuerung durchführen.

In vorteilhafter Ausgestaltung der Erfindung weist das Fahrassistenzsystem ein Umfelderfassungssystem auf, das Umfelderfassungssystem ist ausgeführt, eine Umgebungskarte basierend auf von dem Umfelderfassungssystem erfassten Umgebungsdaten bereitzustellen, und der Ausparkassistent und der Langsamfahr-Folgeassistent sind ausgeführt, die Umgebungskarte zu verwenden. Die Umfelderfassung ermöglicht eine sichere Steuerung des Fahrzeugs durch das jeweilige Assistenzsystem. Die Umgebungskarte wird vorzugsweise durch das Fahrassistenzsystem zentral erstellt, so dass alle Assistenzsysteme darauf zugreifen und die Umgebungskarte nutzen können. Somit ist nur einmal ein Aufwand für die Erstellung der Umgebungskarte erforderlich. Alternativ kann die Umgebungskarte unabhängig von dem Fahrassistenzsystem erstellt und diesem zur Nutzung bereitgestellt werden. Die Umgebungskarte ist üblicherweise als zweidimensionale Karte ausgeführt, welche die Umgebung des Fahrzeugs in einer Draufsicht oder einer ähnlichen Darstellung zeigt. Durch die Draufsicht können Hindernisse in der Umgebung des Fahrzeugs einfach erkannt werden. Außerdem erleichtert dies die Bestimmung einer Position des Hindernisses.

In vorteilhafter Ausgestaltung der Erfindung weist das Umfelderfassungssystem wenigstens einen Umfeldsensor auf und ist ausgeführt, Umfeldinformationen von dem Umfeldsensor zu erhalten. Die Umfeldinformationen können unmittelbar die Umgebungsdaten darstellen, oder die Umgebungsdaten werden durch eine Verarbeitung der Umfeldinformationen aus diesen gewonnen. Umfeldsensoren verschiedener Arten können hier einzeln oder in Kombination verwendet werden, um die Umfeldinformationen zu erhalten. Der Umfeldsensor kann somit eine Kombination verschiedener oder gleichartiger einzelner Umfeldsensoren sein. Als Umfeldsensoren sind beispielsweise Ultraschallsensoren bekannt, die üblicherweise eine Mehrzahl Einzelsensoren umfassen, die gemeinsam an dem Fahrzeug angebracht sind. Als Umfeldsensoren sind weiterhin verschiedene Kamerasysteme bekannt, entweder als einzelne Kamera oder als Stereokamera. Zu Abdeckung einer vollständigen Umgebung des Fahrzeugs können eine Mehrzahl einzelner Kameras oder einzelner Stereokameras gemeinsam verwendet werden. Typischerweise werden drei oder bevorzugt vier einzelne Kameras verwendet, um einen Bereich von 360° abzudecken. Beispielsweise hat sich eine Kombination aus Ultraschallsensoren und einer Frontkamera als Umfeldsensor als vorteilhaft erwiesen. Weitere Umfeldsensoren können beispielsweise Lidar-basierte Systeme, insbesondere Laserscanner, oder Radarsysteme umfassen. Besonders bevorzugt ist der Umfeldsensor als Kokon-System ausgeführt, das eine vollständige Erfassung des Umfelds ermöglicht. Weiter bevorzugt ist der Umfeldsensor mit einer Mehrzahl redundanter Einzelsensoren ausgeführt, um einen Ausfall einzelner Sensoren kompensieren zu können.

In vorteilhafter Ausgestaltung der Erfindung weist das Umfelderfassungssystem wenigstens eine drahtlose Kommunikationsschnittstelle auf und ist ausgeführt, Umfeldinformationen über die Kommunikationsschnittstelle zu empfangen. Die Umfeldinformationen können allein über die Kommunikationsschnittstelle oder zusätzlich zu Umfeldinformationen von dem Umfeldsensor verwendet werden. Die drahtlose Kommunikationsschnittstelle kann beispielsweise eine Schnittstelle zu einem Server sein, der die Umfeldinformationen zentral bereitstellt. Vorzugsweise werden die Umfeldinformationen von dem Server basierend auf einer Positionsinformation des Fahrzeugs bereitgestellt. Die drahtlose Kommunikationsschnittstelle ist vorzugsweise basierend auf Wireless LAN oder einem Mobilfunkstandard, beispielsweise GPRS, UMTS, LTE, oder einem anderen Kommunikationsstandard ausgeführt.

Die Umfeldinformationen können in beiden Fällen eine oder mehrere Umfeldinformationen aus einer Liste mit einer Position des Fahrzeugs, insbesondere basierend auf Satellitenpositionsdaten, einer Fahrtstreckeninformation, einer geplanten Route, einer Geschwindigkeit des Fahrzeugs, einer Identifikation einer verwendeten Fahrspur, Fahrspur- oder Fahrbahngrenzen und weitere umfassen.

In vorteilhafter Ausgestaltung der Erfindung ist das Umfelderfassungssystem ausgeführt, die Umfeldinformationen mittels einer Fahrzeug zu Fahrzeug Kommunikation über die Kommunikationsschnittstelle zu empfangen. Alternativ können die Umfeldinformationen von einem Server bereitgestellt werden. Fahrzeug zu Fahrzeug Kommunikation ist hierbei bevorzugt, da sie üblicherweise auf eine Umgebung des Fahrzeugs beschränkt ist und somit lokale Umgebungsinformationen bereitstellen kann. Eine relative Fahrzeugposition ergibt sich dabei unmittelbar aus der Nähe zu einem anderen Fahrzeug. Fahrzeuge in der Nähe nutzen üblicherweise ähnliche oder zumindest teilweise identische Umfeldinformationen, woraus sich eine hohe Relevanz dieser Umfeldinformationen ergibt.

Das Fahrassistenzsystem ist ausgeführt, eine Steuerung des Fahrzeugs von dem Langsamfahr-Folgeassistenten an einen Fahrzeugführer abhängig von einer vorgegebenen, zurückgelegten Entfernung und/oder abhängig von einer vorgegebenen, zurückgelegten Zeitdauer zu übergeben. Dadurch wird sichergestellt, dass das Fahrzeug von dem Führer des Fahrzeugs wieder selber gesteuert wird. Dies kann auf gesetzlichen Vorgaben basieren und stellt ein zusätzliches Sicherheitsmerkmal dar.

In vorteilhafter Ausgestaltung der Erfindung umfasst das Fahrassistenzsystem einen Abstandsregeltempomaten und ist ausgeführt, beim Erreichen einer Grenzgeschwindigkeit einen nahtlosen Übergang von dem Langsamfahr-Folgeassistenten zu dem Abstandsregeltempomaten durchzuführen. Somit kann auch eine Verbindung zwischen dem Abstandsregeltempomaten und dem Langsamfahr-Folgeassistenten hergestellt werden, wodurch diese Assistenzfunktionen miteinander kombiniert werden können und eine weitergehende Funktionalität bereitstellen. Durch den nahtlosen Übergang von der Kontrolle des Fahrzeugs von dem Langsamfahr-Folgeassistenten zu dem Abstandsregeltempomaten kann der Führer des Fahrzeugs weiter entlastet werden. Eine Interaktion mit dem Fahrzeug ist nicht erforderlich. Dies erhöht die Verkehrssicherheit insgesamt. Auch kann ein höheres Maß an Autonomie für das Fahren erreicht werden, woraus insgesamt ein Komfortgewinn für den Führer des Fahrzeugs resultiert. Dabei kann der Führer des Fahrzeugs einfach die Kontrolle über das Fahrzeug an einem beliebigen Ort bzw. zu einem beliebigen Zeitpunkt übernehmen, der im Wesentlichen im Ermessen des Fahrzeugführers liegt. Der Abstandsregeltempomat ist ein Assistenzsystem, welches auch als adaptive Geschwindigkeitsregelung bekannt ist. Der Abstandsregeltempomat regelt eine vorgegebene Geschwindigkeit, beispielsweise gemäß einer Vorgabe des Fahrzeugführers und/oder gemäß einer Vorgabe beispielsweise gemäß einem Navigationssystem, welches eine aktuell erlaubte Geschwindigkeit basierend auf einer aktuellen Position des Fahrzeugs ermittelt. Dabei wird ein Abstand zu einem vorausfahrenden Fahrzeug ermittelt. Beim Unterschreiten eines erforderlichen Sicherheitsabstands wird das Fahrzeug automatisch verzögert, um einen erforderlichen Sicherheitsabstand herzustellen. Sobald ein ausreichender Sicherheitsabstand hergestellt wurde, wird das Fahrzeug wieder bis zu der vorgegebenen Geschwindigkeit beschleunigt. Der Abstandsregeltempomat wird meist ab einer Geschwindigkeit von 30km/h bis 60 km/h bereitgestellt.

In vorteilhafter Ausgestaltung der Erfindung ist der Abstandsregeltempomat ausgeführt, beim nahtlosen Übergang von dem Langsamfahr-Folgeassistenten das Fahrzeug, dem der Langsamfahr-Folgeassistenten folgt, zu übernehmen und einen Abstand zu diesem Fahrzeug zu überwachen. Der Abstandsregeltempomat kann somit bereits mit einem vorausfahrenden Fahrzeug initialisiert werden, was einen Start des Abstandsregeltempomaten erleichtert und beschleunigt, und den Übergang besonders nahtlos werden lässt.

Nachfolgend wird die Erfindung unter Bezugnahme auf die anliegende Zeichnung anhand bevorzugter Ausführungsformen näher erläutert.

Es zeigt
- Fig. 1: eine schematische Ansicht eines Fahrzeugs mit einem Fahrassistenzsystem gemäß einer ersten, bevorzugten Ausführungsform,
- Fig. 2: eine schematische Ansicht des Fahrassistenzsystems der ersten Ausführungsform mit einem Ausparkassistenten, einem Langsamfahr-Folgeassistenten und einem Abstandsregeltempomaten,
- Fig. 3: eine schematische Ansicht des Fahrzeugs der ersten Ausführungsform mit aktiviertem Fahrassistenzsystem bei einer Erkennung eines vorbeifahrenden Fahrzeugs in einer Draufsicht,
- Fig. 4: eine schematische Ansicht des Fahrzeugs der ersten Ausführungsform mit aktiviertem Fahrassistenzsystem einer ersten Verkehrssituation beim Ausparken hinter dem vorbeigefahrenen Fahrzeug in einer Draufsicht,
- Fig. 5: eine schematische Ansicht des Fahrzeugs der ersten Ausführungsform mit aktiviertem Fahrassistenzsystem in einer zweiten Verkehrssituation beim Ausparken hinter dem vorbeigefahrenen Fahrzeug in einer Draufsicht,
- Fig. 6: eine schematische Ansicht des Fahrzeugs der ersten Ausführungsform mit aktiviertem Fahrassistenzsystem in einer dritten Verkehrssituation beim Ausparken hinter dem vorbeigefahrenen Fahrzeug in einer Draufsicht,
- Fig. 7: eine schematische Ansicht des Fahrzeugs der ersten Ausführungsform mit aktiviertem Fahrassistenzsystem in einer vierten Verkehrssituation beim Ausparken hinter dem vorbeigefahrenen Fahrzeug in einer Draufsicht, und
- Fig. 8: ein Ablaufdiagramm eines Verfahrens Verfahren zum autonomen Steuern eines Fahrzeugs zur Teilnahme an einer Verkehrssituation ausgehend von einem geparkten Fahrzeug in Übereinstimmung mit dem Fahrzeug aus Fig. 1.

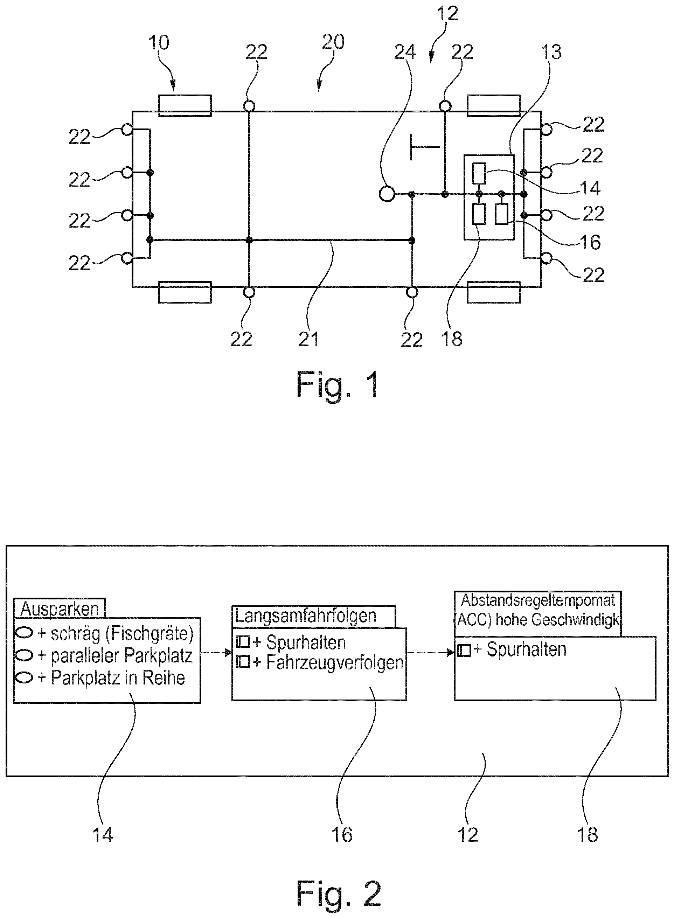

Die Figur 1 zeigt ein Fahrzeug 10 mit einem Fahrassistenzsystem 12 gemäß einer ersten, bevorzugten Ausführungsform.

Das Fahrassistenzsystem 12 umfasst eine Steuereinheit 13, welche eine zentrale Recheneinrichtung des Fahrassistenzsystems 12 darstellt und als Assistenzsysteme einen Ausparkassistenten 14, einen Langsamfahr-Folgeassistenten 16 und einen Abstandsregeltempomaten 18 bereitstellt.

Der Ausparkassistent 14 ist ein Assistenzsystem, welches das Fahrzeug 10 autonom aus einer Parklücke 30 manövriert. Der Ausparkassistent 14 kann das Ausparken unabhängig davon durchführen, ob das Fahrzeug 10 quer oder längs zur Fahrtrichtung in der Parklücke 30 geparkt ist.

Der Langsamfahr-Folgeassistent 16 ist ein Assistenzsystem, das teilweise auch als Stauassistent bezeichnet wird. Der Langsamfahr-Folgeassistent 16 ist für ein autonomes Fahren des Fahrzeugs 10 mit einer geringen Geschwindigkeit von bis zu 60 km/h als Grenzgeschwindigkeit in diesem Ausführungsbeispiel zuständig.

Der Abstandsregeltempomat 18 ist ein Assistenzsystem, welches auch als adaptive Geschwindigkeitsregelung bekannt ist. Der Abstandsregeltempomat 18 regelt eine vorgegebene Geschwindigkeit gemäß einer Vorgabe eines Fahrzeugführers. Dabei wird ein Abstand zu einem vorausfahrenden Fahrzeug ermittelt. Beim Unterschreiten eines erforderlichen Sicherheitsabstands wird das Fahrzeug 10 automatisch verzögert, um einen erforderlichen Sicherheitsabstand herzustellen. Sobald ein ausreichender Sicherheitsabstand hergestellt wurde, wird das Fahrzeug 10 wieder bis zu der vorgegebenen Geschwindigkeit beschleunigt.

Das Fahrassistenzsystem 12 umfasst weiterhin ein Umfelderfassungssystem 20 und einen Datenbus 21, das das Umfelderfassungssystem 20 untereinander und mit dem Ausparkassistenten 14, dem Langsamfahr-Folgeassistenten 16 und dem Abstandsregeltempomaten 18 verbindet.

Das Umfelderfassungssystem 20 weist einen Umfeldsensor 22, 24 auf, mit dem es Umfeldinformationen von einer Umgebung des Fahrzeugs 10 erhält. Der. Umfeldsensor 22, 24 umfasst in dem ersten Ausführungsbeispiel eine Mehrzahl Ultraschallsensoren 22, die gemeinsam an dem Fahrzeug 10 angebracht sind, und eine zentral angeordnete Frontkamera 24.

Das Fahrassistenzsystem 12 erstellt zentral in der Steuereinheit 13 basierend auf von dem Umfelderfassungssystem 20 erfassten Umgebungsdaten eine Umgebungskarte. Die Umgebungskarte ist als zweidimensionale Karte ausgeführt, welche die Umgebung des Fahrzeugs 10 in einer Draufsicht zeigt. Die Umgebungskarte wird von dem Ausparkassistenten 14, dem Langsamfahr-Folgeassistenten 16 und dem Abstandsregeltempomaten 18 benutzt, wie nachstehend im Detail erläutert wird.

Weiter weist das Umfelderfassungssystem 20 eine drahtlose Kommunikationsschnittstelle 46, 48 auf und ist ausgeführt, Umfeldinformationen über die Kommunikationsschnittstelle 46, 48 zu empfangen. Die drahtlose Kommunikationsschnittstelle umfasst hier Wireless LAN 46 und Mobilfunk 48 mit GPRS, UMTS und LTE.

Mittels Wireless LAN 46 führt das Umfelderfassungssystem 20 eine Fahrzeug zu Fahrzeug Kommunikation durch, mit der es Umfeldinformationen von in der Nähe befindlichen Fahrzeugen empfängt.

Mittels Mobilfunk 48 ist das Umfelderfassungssystem 20 mit einem Server verbunden, der Umfeldinformationen basierend auf einer Positionsinformation des Fahrzeugs 10 bereitgestellt.

Die über die drahtlose Kommunikationsschnittstelle 46, 48 empfangenen Umfeldinformationen umfassen eine Position des Fahrzeugs 10, insbesondere basierend auf Satellitenpositionsdaten, eine Fahrtstreckeninformation, eine geplante Route, eine Geschwindigkeit des Fahrzeugs 10, eine Identifikation einer verwendeten Fahrspur sowie Fahrspur- oder Fahrbahngrenzen.

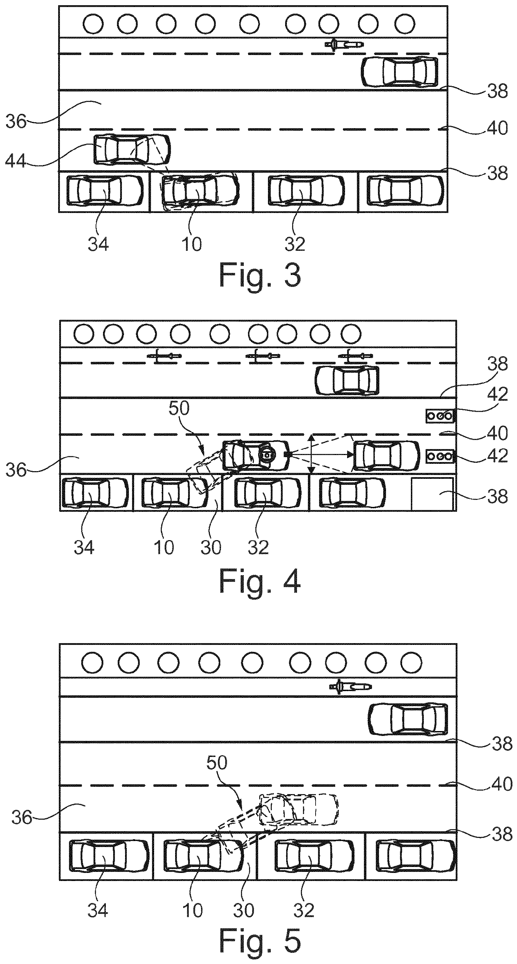

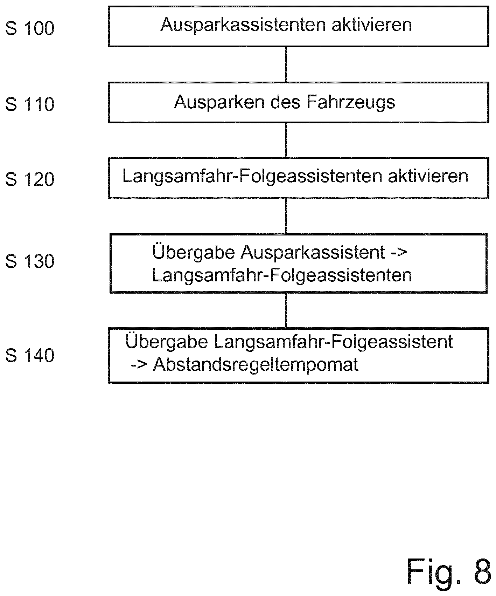

Ein Verfahren zum autonomen Steuern eines Fahrzeugs 10 zur Teilnahme an einer Verkehrssituation ausgehend von einem geparkten Fahrzeug 10 ist in Fig. 8 dargestellt. Das Verfahren ist nachstehend unter zusätzlichem Bezug auf die Figuren 3 - 7 beschrieben.

Das Verfahren beginnt mit einem Schritt S100, der ein Aktivieren des Ausparkassistenten 14 betrifft. Das Fahrzeug 10 ist dabei üblicherweise gestartet und abfahrbereit. Das Fahrzeug 10 befindet sich in der Parklücke 30 zwischen einem vorherigen Fahrzeug 32 und einem nachfolgenden Fahrzeug 34 und ist dort geparkt. Das vorherige Fahrzeug 32 und das nachfolgende Fahrzeug 34 bilden dabei Hindernisse, die die Parklücke 30 begrenzen.

In Schritt S110 erfolgt ein Ausparken des Fahrzeugs 10 mit dem Ausparkassistenten 14. Wie beispielhaft in Fig. 3 dargestellt ist, erfasst dabei einer der Ultraschallsensoren 22 ein sich näherndes, vorbeifahrendes Fahrzeug 44. Der Ausparkassistent 14 setzt das Ausparken fort, sobald das vorbeifahrende Fahrzeug 44 das Fahrzeug 10 passiert hat, und bewegt das Fahrzeug 10 aus der Parklücke 30 entlang einer Trajektorie 50 auf eine benachbarte Fahrbahn 36. Die Trajektorie 50 wird basierend auf der Umgebungskarte bestimmt.

In Schritt S120 erfolgt ein Aktivieren des Langsamfahr-Folgeassistenten 16. Durch das Aktivieren des Langsamfahr-Folgeassistenten 16 wird dieser zur Übernahme des Fahrzeugs 10 vorbereitet, so dass er eine Erfassung des Umfelds basierend auf der Umgebungskarte durchführt.

In Schritt S130 erfolgt ein nahtloses Übergeben einer Fahrzeugsteuerung von dem Ausparkassistenten 14 zu dem Langsamfahr-Folgeassistenten 16. Das Übergeben wird durch das Fahrassistenzsystem 12 durchgeführt.

Der Langsamfahr-Folgeassistent 16 ist dabei ausgeführt, dem an der Parklücke 30 vorbeifahrenden Fahrzeug 44, das von dem Ausparkassistenten 14 erfasst wurde, nach dem Ausparken zu folgen. Dies erfolgt unter Einhaltung erforderlicher Sicherheitsabstände und aller anzuwendender Verkehrsregeln.

Außerdem ist der Langsamfahr-Folgeassistent 16 ausgeführt, eine Fahrbahnmarkierung 38, 40 zu erfassen, und nach dem nahtlosen Übergang von dem Ausparkassistenten 14 das Fahrzeug 10 innerhalb der Fahrbahnmarkierung 38, 40 zu steuern.

Es ergeben sich vier wesentliche Szenarien für die Steuerung des Fahrzeugs 10 durch den Langsamfahr-Folgeassistent 16, die nachstehend unter Bezug auf die Figuren 4 bis 7 erörtert werden.

Fig. 4 zeigt eine erste Verkehrssituation basierend auf der Fahrbahn 36, die zwei Fahrspuren für jede Fahrtrichtung aufweist. Die Fahrbahn 36 ist durch Fahrbahnrandmarkierungen 38 für jede Fahrtrichtung seitlich begrenzt. Die beiden Fahrspuren sind mit einer Fahrbahnspurmarkierung 40 getrennt.

Der Langsamfahr-Folgeassistent 16 hat die Fahrbahnmarkierungen 38, 40 erkannt. Außerdem hat der Langsamfahr-Folgeassistent 16 das vorbeifahrende Fahrzeug 44 erfasst. Darauf basierend steuert der Langsamfahr-Folgeassistent 16 das Fahrzeug 10 derart, dass das Fahrzeug 10 eine Längssteuerung durchführt, um dem vorbeifahrenden Fahrzeug 44 zu folgen. Entsprechend wird der Abstand zu dem vorbeifahrenden Fahrzeug 44 reduziert, wenn es zu einem Halt an einer Ampel 42 kommt. In seitlicher Richtung führt das Fahrzeug 10 entweder eine Steuerung zwischen den Fahrbahnmarkierungen 38, 40 durch, oder eine Steuerung, um dem vorbeifahrenden Fahrzeug 44 zu folgen.

Fig. 5 zeigt eine zweite Verkehrssituation basierend auf einer Fahrbahn 36, die zwei Fahrspuren für jede Fahrtrichtung aufweist. Die Fahrbahn 36 ist durch Fahrbahnrandmarkierungen 38 für jede Fahrtrichtung seitlich begrenzt. Die beiden Fahrspuren sind mit einer Fahrbahnspurmarkierung 40 getrennt.

Der Langsamfahr-Folgeassistent 16 hat die Fahrbahnmarkierungen 38, 40 erkannt. Außerdem hat der Langsamfahr-Folgeassistent 16 kein anderes Fahrzeug, insbesondere kein vorausfahrendes Fahrzeug, erfasst. Darauf basierend steuert der Langsamfahr-Folgeassistent 16 das Fahrzeug 10 derart, dass das Fahrzeug 10 eine Längssteuerung durchführt, wobei das Fahrzeug 10 mit einer vorgegebenen Geschwindigkeit gesteuert wird. Die vorgegebene Geschwindigkeit kann abhängig von einer Positionsinformation, beispielsweise durch ein GPS-Positionierungssignal angepasst werden, beispielsweise anhand bekannter Geschwindigkeitsbeschränkungen. In seitlicher Richtung führt das Fahrzeug 10 eine Steuerung zwischen den Fahrbahnmarkierungen 38, 40 durch. Die Steuerung zwischen den Fahrbahnmarkierungen 38, 40 kann durch Satellitenpositionsdaten unterstützt werden.

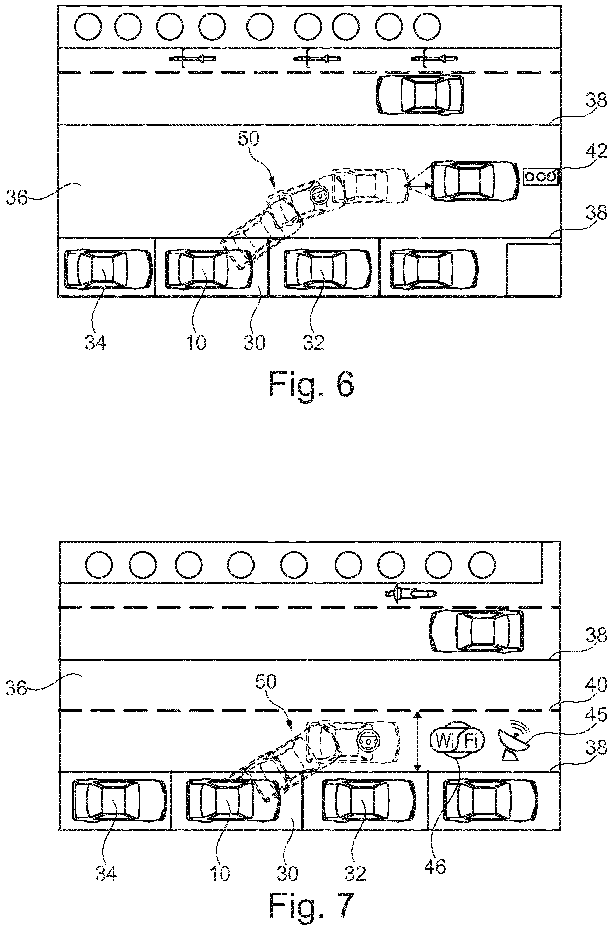

Fig. 6 zeigt eine dritte Verkehrssituation basierend auf einer Fahrbahn 36 mit einer Fahrspur für jede Fahrtrichtung. Die Fahrbahn 36 ist durch Fahrbahnrandmarkierungen 38 für jede Fahrtrichtung seitlich begrenzt.

Der Langsamfahr-Folgeassistent 16 hat die Fahrbahnmarkierungen 38, 40 erkannt. Außerdem hat der Langsamfahr-Folgeassistent 16 das vorbeifahrende Fahrzeug 44 erfasst. Darauf basierend steuert der Langsamfahr-Folgeassistent 16 das Fahrzeug 10 derart, dass das Fahrzeug 10 eine Längssteuerung durchführt, um dem vorbeifahrenden Fahrzeug 44 zu folgen. Entsprechend wird der Abstand zu dem vorbeifahrenden Fahrzeug 44 reduziert, wenn es zu einem Halt an der Ampel 42 kommt. In seitlicher Richtung führt das Fahrzeug 10 durch, um dem vorbeifahrenden Fahrzeug 44 zu folgen.

Fig. 7 zeigt eine vierte Verkehrssituation basierend auf einer Fahrbahn 36 mit einer Fahrspur für jede Fahrtrichtung. Die Fahrbahn 36 ist lediglich durch Fahrbahnrandmarkierungen 38 für jede Fahrtrichtung seitlich begrenzt.

Der Langsamfahr-Folgeassistent 16 hat die Fahrbahnmarkierungen 38, 40 erkannt. Außerdem hat der Langsamfahr-Folgeassistent 16 kein anderes Fahrzeug, insbesondere kein vorausfahrendes Fahrzeug, erfasst. Darauf basierend steuert der Langsamfahr-Folgeassistent 16 das Fahrzeug 10 derart, dass das Fahrzeug 10 eine Längssteuerung durchführt, wobei das Fahrzeug 10 mit einer vorgegebenen Geschwindigkeit gesteuert wird. In dieser Situation empfängt das Fahrassistenzsystem 12 Positionsdaten, beispielsweise Satellitenpositionsdaten. Auf der Basis der Positionsdaten führt das Fahrzeug 10 eine Steuerung des Fahrzeugs 10 in seitlicher Richtung durch.

In Schritt S140 erfolgt ein nahtloses Übergeben der Fahrzeugsteuerung beim Erreichen der Grenzgeschwindigkeit von dem Langsamfahr-Folgeassistenten 16 zu dem Abstandsregeltempomat 18. Dabei wird ggf. das vorbeifahrende Fahrzeug 44, dem der Langsamfahr-Folgeassistenten 16 folgt, übernommen und ein Abstand zu diesem Fahrzeug überwacht.

Während der Aktivität des Fahrassistenzsystems 12 kann zu einem prinzipiell beliebigen Zeitpunkt der Führer des Fahrzeugs 10 das jeweilige Assistenzsystem 14, 16, 18 beenden und selber die Kontrolle über das Fahrzeug 10 übernehmen.

Ein Beenden der Steuerung des Fahrzeugs 10 durch das Fahrassistenzsystem 12 kann optional abhängig von einer vorgegebenen, zurückgelegten Entfernung und/oder abhängig von einer vorgegebenen, zurückgelegten Zeitdauer gerechnet ab dem Beginn der Aktivität des entsprechende Assistenzsystems 14, 16, 18 erfolgen.

### Bezugszeichenliste

- 10: Fahrzeug, geparktes Fahrzeug
- 12: Fahrassistenzsystem
- 13: Steuereinheit
- 14: Ausparkassistent
- 16: Langsamfahr-Folgeassistent
- 18: Abstandsregeltempomat
- 20: Umfelderfassungssystem
- 21: Datenbus
- 22: Ultraschallsensor, Umfeldsensor
- 24: Frontkamera, Umfeldsensor
- 30: Parklücke
- 32: vorheriges Fahrzeug, Hindernis
- 34: nachfolgendes Fahrzeug, Hindernis
- 36: Fahrbahn
- 38: Fahrbahnrandmarkierung, Fahrbahnmarkierung
- 40: Fahrbahnspurmarkierung, Fahrbahnmarkierung
- 42: Ampel
- 44: vorbeifahrendes Fahrzeug
- 46: Wireless LAN, Kommunikationsschnittstelle
- 48: Mobilfunk, Kommunikationsschnittstelle
- 50: Trajektorie

### Bezugszeichenliste

- 10: Fahrzeug, geparktes Fahrzeug
- 12: Fahrassistenzsystem
- 13: Steuereinheit
- 14: Ausparkassistent
- 16: Langsamfahr-Folgeassistent
- 18: Abstandsregeltempomat
- 20: Umfelderfassungssystem
- 21: Datenbus
- 22: Ultraschallsensor, Umfeldsensor
- 24: Frontkamera, Umfeldsensor
- 30: Parklücke
- 32: vorheriges Fahrzeug, Hindernis
- 34: nachfolgendes Fahrzeug, Hindernis
- 36: Fahrbahn
- 38: Fahrbahnrandmarkierung, Fahrbahnmarkierung
- 40: Fahrbahnspurmarkierung, Fahrbahnmarkierung
- 42: Ampel
- 44: vorbeifahrendes Fahrzeug
- 46: Wireless LAN, Kommunikationsschnittstelle
- 48: Mobilfunk, Kommunikationsschnittstelle
- 50: Trajektorie

## Patentansprüche

1. Fahrassistenzsystem (12) für ein Fahrzeug (10) mit
einem Ausparkassistenten (14) und
einem Langsamfahr-Folgeassistenten (16),
wobei das Fahrassistenzsystem (12) ausgeführt ist, nach einem Ausparken des Fahrzeugs (10) aus einer Parklücke (30) einen nahtlosen Übergang von dem Ausparkassistenten (14) zu dem Langsamfahr-Folgeassistenten (16) durchzuführen, **dadurch gekennzeichnet, dass**
der Ausparkassistent (14) ausgeführt ist, ein an der Parklücke (30) vorbeifahrendes Fahrzeug (44) zu erfassen, und
der Langsamfahr-Folgeassistent (16) ausgeführt ist, dem an der Parklücke (30) vorbeifahrenden Fahrzeug (44) nach dem Ausparken zu folgen,
wobei das Fahrassistenzsystem (12) ausgeführt ist, eine Steuerung des Fahrzeugs (10) von dem Langsamfahr-Folgeassistenten (16) an einen Fahrzeugführer abhängig von einer vorgegebenen, zurückgelegten Entfernung und/oder abhängig von einer vorgegebenen, zurückgelegten Zeitdauer zu übergeben.

2. Fahrassistenzsystem (12) nach Anspruch 1, **dadurch gekennzeichnet, dass**
der Langsamfahr-Folgeassistent (16) ausgeführt ist, eine Fahrbahnmarkierung (38, 40) zu erfassen, und nach dem nahtlosen Übergang von dem Ausparkassistenten (14) das Fahrzeug (10) innerhalb der Fahrbahnmarkierung (38, 40) zu steuern.

3. Fahrassistenzsystem (12) nach einem der vorhergehenden Ansprüche, **dadurch gekennzeichnet, dass** das Fahrassistenzsystem (12) ein Umfelderfassungssystem (21) aufweist, das Umfelderfassungssystem (21) ausgeführt ist, eine Umgebungskarte basierend auf von dem Umfelderfassungssystem (21) erfassten Umgebungsdaten bereitzustellen, und der Ausparkassistent (14) und der Langsamfahr-Folgeassistent (16) ausgeführt sind, die Umgebungskarte zu verwenden.

4. Fahrassistenzsystem (12) nach Anspruch 3, **dadurch gekennzeichnet, dass** das Umfelderfassungssystem (21) wenigstens einen Umfeldsensor (22, 24) aufweist und ausgeführt ist, Umfeldinformationen von dem Umfeldsensor (22, 24) zu erhalten.

5. Fahrassistenzsystem (12) nach einem der vorhergehenden Ansprüche 4 oder 5, **dadurch gekennzeichnet, dass** das Umfelderfassungssystem (21) wenigstens eine drahtlose Kommunikationsschnittstelle (46, 48) aufweist und ausgeführt ist, Umfeldinformationen über die Kommunikationsschnittstelle (46, 48) zu empfangen.

6. Fahrassistenzsystem (12) nach Anspruch 6, **dadurch gekennzeichnet, dass** das Umfelderfassungssystem (21) ausgeführt ist, die Umfeldinformationen mittels einer Fahrzeug zu Fahrzeug Kommunikation über die Kommunikationsschnittstelle (46, 48) zu empfangen.

7. Fahrassistenzsystem (12) nach einem der vorhergehenden Ansprüche, **dadurch gekennzeichnet, dass** das Fahrassistenzsystem (12) einen Abstandsregeltempomaten (18) umfasst, und ausgeführt ist, beim Erreichen einer Grenzgeschwindigkeit einen nahtlosen Übergang von dem Langsamfahr-Folgeassistenten (16) zu dem Abstandsregeltempomaten (18) durchzuführen.

8. Fahrassistenzsystem (12) nach Anspruch 7, **dadurch gekennzeichnet, dass** der Abstandsregeltempomat (18) ausgeführt ist, beim nahtlosen Übergang von dem Langsamfahr-Folgeassistenten (16) das Fahrzeug (44), dem der Langsamfahr-Folgeassistenten (16) folgt, zu übernehmen und einen Abstand zu diesem Fahrzeug (44) zu überwachen.

9. Fahrzeug (10) mit einem Fahrassistenzsystem (12) nach einem der vorhergehenden Ansprüche.

10. Verfahren zum autonomen Steuern eines Fahrzeugs (10) zur Teilnahme an einer Verkehrssituation ausgehend von einem geparkten Fahrzeug (10), umfassend die Schritte
Aktivieren eines Ausparkassistenten (14),
Ausparken des Fahrzeugs (10) mit dem Ausparkassistenten (14),
Aktivieren eines Langsamfahr-Folgeassistenten (16),
nahtloses Übergeben einer Fahrzeugsteuerung von dem Ausparkassistenten (14) zu dem Langsamfahr-Folgeassistenten (16),
**dadurch gekennzeichnet, dass** der Ausparkassistent (14) ein an der Parklücke (30) vorbeifahrendes Fahrzeug (44) erfasst, dass der Langsamfahr-Folgeassistent (16) dem an der Parklücke (30) vorbeifahrenden Fahrzeug (44) nach dem Ausparken folgt, und dass das Fahrassistenzsystem (12) eine Steuerung des Fahrzeugs (10) von dem Langsamfahr-Folgeassistenten (16) an einen Fahrzeugführer abhängig von einer vorgegebenen, zurückgelegten Entfernung und/oder abhängig von einer vorgegebenen, zurückgelegten Zeitdauer übergibt.

## Claims

1. Driving assistance system (12) for a vehicle (10) having
a parking-space-exiting assistant (14) and
an adaptive low-speed driving assistant (16), wherein the driving assistance system (12) is designed to carry out a seamless transmission from the parking-space-exiting assistant (14) to the adaptive low-speed driving assistant (16) after the vehicle (10) exits a parking space (30), **characterized in that**
the parking-space-exiting assistant (14) is designed to sense a vehicle (44) which is driving past the parking space (30), and
the adaptive low-speed driving assistant (16) is designed to follow the vehicle (44) driving past the parking space (30), after the exiting of the parking space,
wherein the driving assistance system (12) is designed to transfer control of the vehicle (10) from the adaptive low-speed driving assistant (16) to a vehicle driver as a function of a prescribed distance travelled and/or as a function of a prescribed period of time for which the vehicle has travelled.

2. Driving assistance system (12) according to Claim 1, **characterized in that** the adaptive low-speed driving assistant (16) is designed to sense a roadway marking (38, 40) and to steer the vehicle (10) within the roadway marking (38, 40) after the seamless transition from the parking-space-exiting assistant (14).

3. Driving assistance system (12) according to one of the preceding claims, **characterized in that** the driving assistance system (12) has a surroundings-sensing system (21), the surroundings sensing system (21) is designed to make available a map of the surroundings on the basis of surroundings data acquired by the surroundings-sensing system (21), and the parking-space-exiting assistant (14) and the adaptive low-speed driving assistant (16) are designed to use the map of the surroundings.

4. Driving assistance system (12) according to Claim 3, **characterized in that** the surroundings-sensing system (21) has at least one surroundings sensor (22, 24) and is designed to acquire surroundings information from the surroundings sensor (22, 24).

5. Driving assistance system (12) according to one of the preceding Claims 4 and 5, **characterized in that** the surroundings-sensing system (21) has at least one wireless communication interface (46, 48) and is designed to receive surroundings information via the communication interface (46, 48).

6. Driving assistance system (12) according to Claim 6, **characterized in that** the surroundings-sensing system (21) is designed to receive the surroundings information by means of vehicle-to-vehicle communication via the communication interface (46, 48) .

7. Driving assistance system (12) according to one of the preceding claims, **characterized in that** the driving assistance system (12) comprises an adaptive cruise control system (18) and is designed to carry out a seamless transmission from the adaptive low-speed driving assistant (16) to the adaptive cruise control system (18) when a limiting speed is reached.

8. Driving assistance system (12) according to Claim 7, **characterized in that** the adaptive cruise control system (18) is designed to take over control of the vehicle (44) which has been followed by the adaptive low-speed driving assistant (16), at the seamless transmission from the adaptive low-speed driving assistant (16), and to monitor a distance from this vehicle (44).

9. Vehicle (10) having a driving assistance system (12) according to one of the preceding claims.

10. Method for autonomously steering a vehicle (10) for participation in a traffic situation starting from a parked vehicle (10), comprising the steps:
activating a parking-space-exiting assistant (14), exiting the parking space with the vehicle (10) using the parking-space-exiting assistant (14),
activating an adaptive low-speed driving assistant (16),
seamless transfer of control of a vehicle from the parking-space-exiting assistant (14) to the adaptive low-speed driving assistant (16),
**characterized in that** the parking-space-exiting assistant (14) senses a vehicle (44) driving past the parking space (30), **in that** the adaptive low-speed driving assistant (16) follows the vehicle (44) driving past the parking space (30), after the exiting of the parking space, and **in that** the driving assistance system (12) transfers control of the vehicle (10) from the adaptive low-speed driving assistant (16) to a vehicle driver as a function of a prescribed distance travelled and/or as a function of a prescribed duration for which the vehicle has travelled.

## Revendications

1. Système d'assistance au conducteur (12) pour un véhicule (10), comprenant
un assistant de sortie de stationnement (14) et
un assistant de suivi de conduite lente (16),
le système d'assistance au conducteur (12) étant configuré pour, après une sortie de stationnement du véhicule (10) d'un emplacement de stationnement (30), effectuer une transition en douceur de l'assistant de sortie de stationnement (14) vers l'assistant de suivi de conduite lente (16),
**caractérisé en ce que**
l'assistant de sortie de stationnement (14) est configuré pour détecter un véhicule (44) qui passe à côté de l'emplacement de stationnement (30), et
l'assistant de suivi de conduite lente (16) est configuré pour suivre le véhicule (44) qui passe à côté de l'emplacement de stationnement (30) après la sortie de stationnement,
le système d'assistance au conducteur (12) étant configuré pour transférer une commande du véhicule (10) de l'assistant de suivi de conduite lente (16) à un conducteur de véhicule en fonction d'une distance prédéfinie parcourue et/ou en fonction d'une durée prédéfinie écoulée.

2. Système d'assistance au conducteur (12) selon la revendication 1, **caractérisé en ce que** l'assistant de suivi de conduite lente (16) est configuré pour détecter un marquage de la chaussée (38, 40) et, après la transition en douceur depuis l'assistant de sortie de stationnement (14), commander le véhicule (10) à l'intérieur du marquage de la chaussée (38, 40).

3. Système d'assistance au conducteur (12) selon l'une des revendications précédentes, **caractérisé en ce que** le système d'assistance au conducteur (12) possède un système de balayage de l'environnement (21), le système de balayage de l'environnement (21) est configuré pour fournir une carte de l'environnement basée sur des données d'environnement acquises par le système de balayage de l'environnement (21), et l'assistant de sortie de stationnement (14) ainsi que l'assistant de suivi de conduite lente (16) sont configurés pour utiliser la carte de l'environnement.

4. Système d'assistance au conducteur (12) selon la revendication 3, **caractérisé en ce que** le système de balayage de l'environnement (21) possède au moins un capteur d'environnement (22, 24) et est configuré pour obtenir des informations d'environnement de la part du capteur d'environnement (22, 24).

5. Système d'assistance au conducteur (12) selon l'une des revendications précédentes 4 ou 5, **caractérisé en ce que** le système de balayage de l'environnement (21) possède au moins une interface de communication (46, 48) sans fil et est configuré pour recevoir les informations d'environnement par le biais de l'interface de communication (46, 48).

6. Système d'assistance au conducteur (12) selon la revendication 6, **caractérisé en ce que** le système de balayage de l'environnement (21) est configuré pour recevoir les informations d'environnement par le biais de l'interface de communication (46, 48) au moyen d'une communication de véhicule à véhicule.

7. Système d'assistance au conducteur (12) selon l'une des revendications précédentes, **caractérisé en ce que** le système d'assistance au conducteur (12) comporte un régulateur de vitesse à régulation de distance (18) et est configuré pour, lorsqu'une vitesse limite est atteinte, effectuer une transition en douceur de l'assistant de suivi de conduite lente (16) au régulateur de vitesse à régulation de distance (18).

8. Système d'assistance au conducteur (12) selon la revendication 7, **caractérisé en ce que** le régulateur de vitesse à régulation de distance (18) est configuré pour, lors de la transition en douceur depuis l'assistant de suivi de conduite lente (16), prendre en charge le véhicule (44) qui est suivi par l'assistant de suivi de conduite lente (16) et surveiller une distance par rapport à ce véhicule (44).

9. Véhicule (10) équipé d'un système d'assistance au conducteur (12) selon l'une des revendications précédentes.

10. Procédé de commande autonome d'un véhicule (10) en vue de sa participation à une situation de trafic en partant d'un véhicule (10) stationné, comprenant les étapes suivantes
activation d'un assistant de sortie de stationnement (14), sortie de stationnement du véhicule (10) avec l'assistant de sortie de stationnement (14),
activation d'un assistant de suivi de conduite lente (16), transfert en douceur d'une commande de véhicule de l'assistant de sortie de stationnement (14) vers l'assistant de suivi de conduite lente (16),
**caractérisé en ce que** l'assistant de sortie de stationnement (14) détecte un véhicule (44) qui passe à côté de l'emplacement de stationnement (30), **en ce que** l'assistant de suivi de conduite lente (16) suit le véhicule (44) qui passe à côté de l'emplacement de stationnement (30) après la sortie de stationnement, et **en ce que** le système d'assistance au conducteur (12) transfère une commande du véhicule (10) de l'assistant de suivi de conduite lente (16) à un conducteur de véhicule en fonction d'une distance prédéfinie parcourue et/ou en fonction d'une durée prédéfinie écoulée.
